**Europäisches Patentamt**

**European Patent Office**

**Office européen des brevets**

(11) Publication number: **0 130 087**

**B1**

(12) # EUROPEAN PATENT SPECIFICATION

(45) Date of publication of patent specification: **24.08.88**

(51) Int. Cl.⁴: **C 09 J 3/14, C 08 L 53/02**

(21) Application number: **84304354.8**

(22) Date of filing: **27.06.84**

(54) **Tackified star block copolymer pressure-sensitive adhesive composition and the sheet materials coated therewith.**

(30) Priority: **27.06.83 US 507684**

(43) Date of publication of application:
**02.01.85 Bulletin 85/01**

(45) Publication of the grant of the patent:
**24.08.88 Bulletin 88/34**

(84) Designated Contracting States:
**DE FR GB IT NL**

(56) References cited:
**FR-A-2 331 607**
**US-A-4 163 077**

(73) Proprietor: **MINNESOTA MINING AND MANUFACTURING COMPANY**
**3M Center, P.O. Box 33427**
**St. Paul, Minnesota 55133-3427 (US)**

(72) Inventor: **Lau, Felix F. c/o Minnesota Mining and Manufacturing Company 2501 Hudson Road**
**P.O. Box 33427 St. Paul Minnesota 55133 (US)**
Inventor: **Silver, Spencer F. c/o Minnesota Mining and**
**Manufacturing Company 2501 Hudson Road**
**P.O. Box 33427 St. Paul Minnesota 55133 (US)**

(74) Representative: **Baillie, Iain Cameron et al**
**c/o Ladas & Parry Isartorplatz 5**
**D-8000 München 2 (DE)**

Courier Press, Leamington Spa, England.

EP 0 130 087 B1

## 0 130 087

**Description**

Technical field

This invention relates to normally tacky pressure-sensitive adhesive compositions comprising tackified star block copolymer and sheet materials coated therewith.

Background art

Normally tacky pressure-sensitive adhesive (hereinafter referred to by the abbreviation "PSA") compositions suitable, for example, for use in adhesive tapes must have an art-recognized four-fold balance of adhesion, cohesion, stretchiness and elasticity. PSA coated tapes have been produced and sold for at least a half century.

The early PSA tapes relied upon natural rubber for the elastomeric base and wood rosins as tackifiers to provide adhesive compositions with the requisite four-fold balance of properties. While tackified natural rubber provided a PSA composition which was of commercial significance, improvements in such compositions were sought because of the expanded expectation level of performance of PSA compositions. Various improved PSA compositions were thus developed.

Ionic polymerization produced block copolymer elastomers such as linear AB and ABA block copolymers which were likely candidates for the elastomer base in the PSA compositions and many were incorporated into such compositions to produce adhesives having high performance characteristics.

Other elastomer candidates for preparing PSA compositions include so-called branched block copolymers, radial teleblock copolymers and multiarm star block copolymers. The various polymer structures described by the term "branched", "radial" and "star" are not the same. "Branched" is a generic term indicating a nonlinear structure which may contain various polymeric subunits appended to various places on a main polymer chain or backbone. Such structures are typically complex in nature and may be derived by free radical, cationic or anionic-polymerization. The term "radial" generally refers to branched polymer structures obtained by linking individual polymeric segments to yield a mixture of polymers having four or fewer arms joined centrally. The term "star" describes the structure of a multiarm polymer with copolymer arms which are joined together at a nucleus formed of a linking group which is virtually a point relative to the overall size of the remainder of the polymer structure. Non-terminating coupling agents, those in which the polymerizing anionic structure is retained, are generally preferred as linking agents for "star" structures.

While it is known to prepare adhesive compositions or PSA compositions employing branched block copolymers, radial teleblock copolymers and multiarm star block copolymers, it is not known that a unique combination of superior shear holding power and desirable melt viscosity may be obtained by selecting only star block copolymers having 6 or more arms to prepare a tackified adhesive composition.

US 4,163,077 discloses adhesive compositions for pressure sensitive adhesive tapes, the compositions comprisng a) radial or teleblock copolymers consisting of several polystyrene-terminated elastomeric branches, each branch being a homopolymer of isoprene extending from a central hub; b) rubbery synthetic block copolymer (which is optionally identical with the above radial or teleblock copolymer) and c) tackifier resin. In Example 15 of Table 1 components a) and b) are each "Solprene" 423 (TM) which is a 4-arm radial block copolymer and is a component of a comparison composition cited in Example I and Table II of the present application.

FR 2,331,607 discloses a hot-melt pressure-sensitive adhesive composition consisting essentially of a mixture of a rubbery radial block copolymer, tackifier resin and optionally a rubber extender oil. The radial block copolymer has terminal monovinyl aromatic or monovinylidene aromatic polymer blocks and polymer midblocks derived from butadiene. However, the manufacture of these compositions involves a hydrogenation step which leaves a residual proportion of below 5% (preferably below 2%) of the olefinic double bonds in these midblocks.

The prior art fails to recognize that the shear strength of the PSA may be optimized without sacrificing the ease of processing. Applicant's adhesive composition provides an adhesive composition with improved shear strength and good processability which can be used in packaging tape applications where shear holding power is necessary.

Disclosure of invention

The present invention provides a normally tacky and PSA composition and adhesive coated sheet materials having the requisite four-fold balance of adhesion, cohesion, stretchiness and elasticity. The adhesive composition also has good peel strength and adhesive tack plus superior shear strength and creep resistance as well as excellent processability with or without solvent.

In accordance with the invention, a normally tacky and PSA composition having a melt viscosity in the range of about 4—25 Pa · s (40—250 pois) measured at a shear rate of 5000 $s^{-1}$ comprises:

(1) star block copolymers having the general formula $(A\text{—}B\text{—})_nC$ wherein:

"$(A\text{—}B\text{—})$" represents one of "n" polymeric arms radiating from a nucleus represented by "C";

"A" represents a terminal polymeric block consisting essentially of polymerized monovinyl aromatic monomer having 8 to 18 carbon atoms and being selected from a group consisting of styrene and alkylated styrene;

"B" represents a polymeric block consisting essentially of polymerized conjugated diene monomer having 4 to 12 carbon atoms;

"C" represents the residue of a polyvinyl aromatic compound providing a nucleus which links together at least six polymeric arms of the star block copolymer; and "n" is an integer of at least 6, n being measured by size exclusion gel permeation chromatography; and wherein:

"A" comprises about 5—25 weight percent of the total weight of A plus B in said polymer;

"B" comprises about 75 to 95 weight percent of the total weight of A plus B in said polymer; and

"C" comprises no more than about 3 weight percent of the total weight of said star block copolymer; and

(2) sufficient adhesive tackifier resin to maintain an adhesive composition with balance of PSA properties wherein the shear holding power is at least 1,000 minutes.

The monovinyl aromatic monomer preferably is selected from the group consisting of styrene, methyl styrene (e.g., alpha-methyl styrene or ring substituted methyl styrene) and butyl styrene, with styrene being preferred.

The preferred conjugated diene has from 4 to about 10 carbon atoms. Useful conjugated dienes include butadiene, isoprene, piperylene, myrcene, 2,3-dimethyl butadiene and mixtures of two or more of these. The most preferred conjugated diene is isoprene.

Preferably, the adhesive tackifier resin is selected from a group consisting of polyterpene resin, polyvinyl aromatic resin, coumarone-indene and mixed $C_5$ aliphatic and $C_9$ aromatic hydrocarbon resins. The mixed $C_5/C_9$ resin is most preferred.

A normally tacky and pressure-sensitive coated sheet material in accordance with the present invention comprises a backing member and a coating covering at least a portion of one major surface thereof of the above-defined PSA composition.

Brief description of drawing

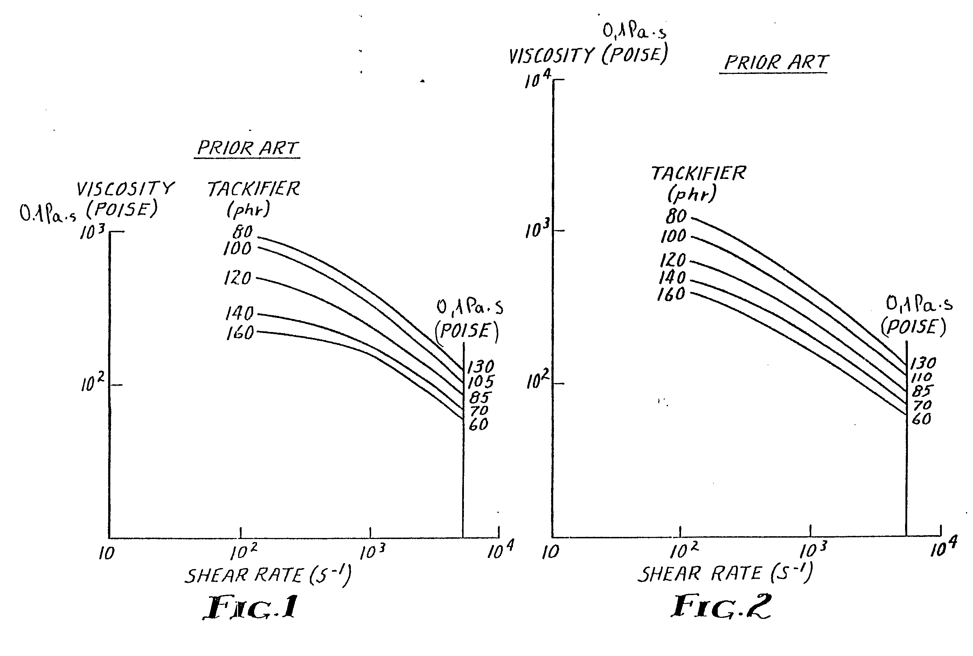

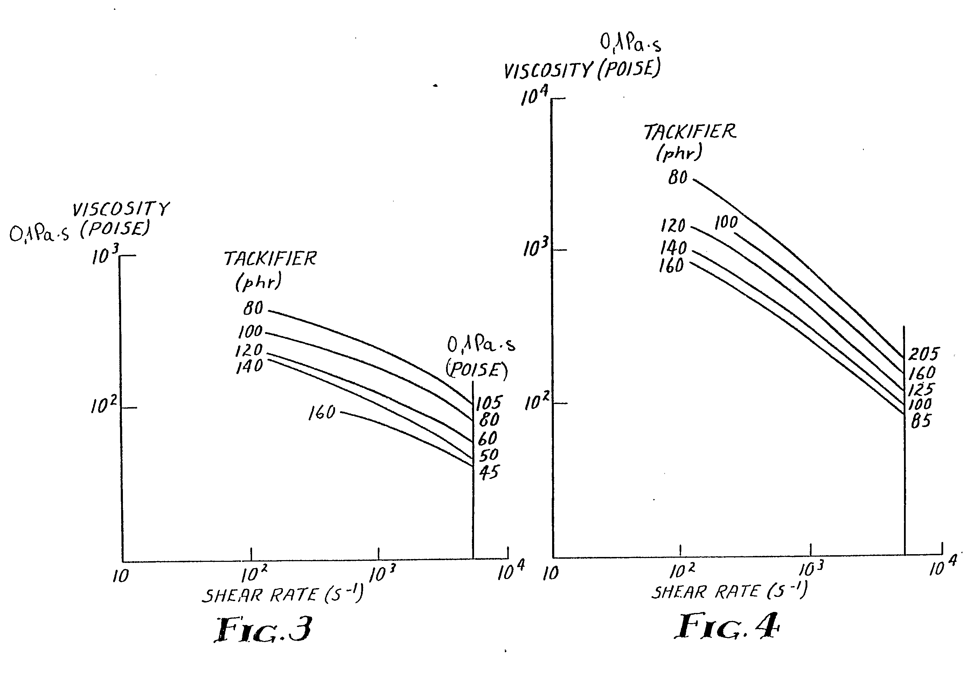

In order to better understand the benefit divided from the teaching of this invention, a comparison has been made of the melt viscosity as a function of the shear rate of adhesive compositions including the star block copolymer according to the invention with typical prior art adhesive compositions which utilize either linear ABA-type block copolymers or radial teleblock copolymers having less than 6 arms. This comparison is shown in Figures 1—4 of the drawing. This comparison was accomplished by measuring the viscosity of comparably tackified examples of commercially available block copolymers and adhesive compositions containing star block copolymers according to the invention.

Figure 1 is a plot resulting from the evalutaion of a prior art PSA with varying amounts of tackifier, as shown, which utilizes a commercially available linear ABA-type block copolymer, consisting essentially of a styrene-isoprene-styrene with a molecular weight of about 160,000 (Shell's Kraton® 1107).

Figure 2 is a plot resulting from the evaluation of a prior art PSA with varying amounts of tackifier, as shown, which utilizes a radial teleblock copolymer having less than 6 arms with a molecular weight of about 280,000 (Phillip's Solprene® S-423).

Figure 3 is a plot resulting from the evaluation of an adhesive composition according to the present invention with varying amounts of tackifier, as shown, containing an 8 arm star block copolymer having a molecular weight of about 386,000. (Examples S-2 of Table 1).

Figure 4 is a plot resulting from the evaluation of an adhesive composition according to the present invention with varying amounts of tackifier, as shown, containing an 8 arm star block copolymer having a molecular weight of about 774,000. (Example S-8 of Table I).

Best mode for carrying out the invention

Star block copolymers useful in the present invention must be of the particular type defined above in order to obtain the required adhesive properties in the claimed PSA compositions, particularly the very high shear values and desirable processability.

Such polymers have been prepareed by polymerization of monomer to produce the A polymeric block, with an organolithium compound followed by the addition of another monomer to produce the B polymeric block to form an AB block copolymer terminated with a lithium ion. Subsequently, a linking agent with a functionality of at least two is added to the lithium terminated B blocks to form the star structure which consists of copolymeric arms connected via the linking agent, the linking agent being in such a small proportion to the total weight percent of the resulting copolymer that its presence is relatively inconsequential as compared to the properties of the polymeric constituents.

The A block preferably has a glass transition temperature ($T_g$) of at least about 20°C above room temperature.

The B block preferably has a $T_g$ at least 20°C below room temperature.

The star block copolymer must have at least 6 polymeric (A—B) arms. Preferably, the number of polymeric arms varies from 6 to about 20.

The molecular weight of each polymeric arm may vary from 40,000 to 200,000. Molecular weight of the individual blocks of the polymeric arms may be varied to provide optimum properties. The molecular weight of the monoalkenylaromatic blocks may be 5,000 to about 50,000 preferably 8,000 to 20,000. The molecular weight of the conjugated diene blocks may be 20,000 to about 200,000 preferably 50,000 to 100,000. The ratio of monoalkenylaromatic and conjugated diene preferably is chosen so that a glassy or a hard phase resulting from the monoalkenylaromatic blocks constitutes between 6% and 20% of the total polymer present, preferably in the range 10% to about 18% with the remainder being a rubbery phase resulting from the conjugated diene blocks. The number of arms of the star block copolymer may be controlled by selection of the linking agent. With control of these variables, a molecular weight required to produce the desired shear value end product may be reached.

The initiators useful in the preparation of the star block copolymer are known alkyllithium compounds such as methyllithium, *n*-butyllithium and *sec*-butyllithium, cycloalkyllithium compounds such as cyclohexyllithium and aryllithium compounds such as phenyllithium, naphthyllithium and the like.

The quantity of linking agent used is derived from the actual content (moles/liter basis) of active polymer chain ends in the polymerization mixture. Generally, a mole equivalent ratio of linking agent to active chain ends of 3:1 to about 20:1 or higher may be used. The preferred ratios are 4:1 to about 6:1. In the case of difunctional agents which polymerize during the coupling reaction, such as divinylbenzene, the amount of agent to be used should be determined for the conditions of reaction, since the number of equivalent functional sites is variable.

The compactness of the star block configuration, in contrast to its linear analog, contributes substantially to the ease of processing the PSA composition.

The tackifier resin is selected to provide the star block copolymer with an adequate degree of tack to maintain in the resultant composition balanced PSA properties including a high shear strength value. As is known in the art, not all tackifier resins interact with the same base elastomer in the same manner; therefore some minor amount of experimentation may be required to select the appropriate tackifier resin and to achieve optimum adhesive performance. Such minor experimentation is well within the capability of one skilled in the adhesive art. Along these lines, selection of the resin should take into account whether the resin associates with the thermoplastic styrene segments or the rubbery segments.

A preferred diolefin/olefin copolymer resin is a mixture of piperylene and at least one olefin containing 4 to 6 carbon atoms at a mole ratio in the range of 0.8 to 1.0 to about 2.5 to 1.0. Optionally, the copolymer may be modified by copolymerizing therewith about 5 to about 20 weight percent based on the total monomers of at least one additional monomer selected from methyl styrene and dicyclopentadiene. These resins typically have a softening point in the range of 50°C to 150°C.

The PSA compositions of this invention may be formed by mixing star block copolymer and tackifying resin, either in solution, as dry granules or melt blending. The application of the PSA composition by conventional hot melt extrusion equipment is easily facilitated because of the relatively low melt viscosity of this high shear strength adhesive. The PSA composition may be applied to any conventional backing member such as paper, foil, film, woven or nonwoven backing material such as that used for packaging and fastening tapes.

Examples

The invention is illustrated by the following examples, wherein all parts are by weight unless otherwise indicated.

The description of preparation of star block copolymers S-1 to S-9

A polymerization reactor was charged with dry cyclohexane and dry styrene monomer. *Sec*-butyl lithium was added and the styrene block allowed to polymerize for one hour at 60—65°C. Dry isoprene was then added and the second block allowed to polymerize for a minimum of 2 hours at 50—65°C. The block polymer "arms" so produced were then linked in a star structure by the addition of dry divinylbenzene (Matheson Coleman & Bell, 56%) at 65—70°C. and maintained at this temperature overnight (about 14 hours). After cooling to room temperature, 1—2% (based on solids) octadecyl-3,5-di-tert-butyl-4-hydroxyhydrocinnamate (Ciba Geigy "Irganox" 1076)® antioxidant and thermal stabilizer was added as a polymer stabilizer. The amount and type of each ingredient used in the reaction together with the composition of the resultant polymer are shown in Table I. It will be recognized by those skilled in the art that these polymerizations were conducted with meticulus attention to maintaining anhydrous and anaerobic conditions.

TABLE I

| | | | Reactants—parts | | | | Polymer characterization | | | |
|---|---|---|---|---|---|---|---|---|---|---|
| Polymer number | Cyclo-hexane | Sec-butyl lithium | Styrene | Isoprene | Divinyl-benzene | $C_2H_4Br_2$ | Styrene-isoprene[1] ($MW \times 10^{-3}$) | Star[1] ($MW \times 10^{-3}$) | Number arms[2] per star |
| S-1 | 2,276 | 0.41 | 52 | 377 | 3.48 | — | 8—60 | 526 | 7 |
| S-2 | 11,400 | 13 | 210 | 1,060 | 18 | — | 8—40 | 386 | 8 |
| S-3 | 2,300 | 0.38 | 60.5 | 365.5 | 3.53 | — | 10—60 | 699 | 8 |
| S-4 | 2,381 | 0.32 | 60.5 | 310.8 | 4.76 | — | 12—60 | 648 | 9 |
| S-5 | 1,545 | 0.11 | 28.6 | 102 | 1.03 | — | 17—60 | 430 | 7 |
| S-6 | 2,328 | 0.64 | 59.7 | 363.3 | 8.35 | — | 6—36 | 330 | 8 |
| S-7 | 2,194 | 0.26 | 49.3 | 300 | 2.2 | — | 12—74 | 874 | 8 |
| S-8 | 11,400 | 9.0 | 210 | 1,060 | 18 | — | 15—76 | 774 | 8 |
| S-9[3] | 1,506 | 0.24 | 32.1 | 225 | — | 0.7 | 8—60 | 192 | 2 |

[1]. Molecular weight determined by size exclusion gel permeation chromatography.
[2]. Ratio of observed star molecular weight to calculated arm molecular weight.
[3]. S-9 is not a star block copolymer. It is a 2-arm linear block analog of S-2.

Example 1

Star block copolymer S-8 was compounded into PSA compositions by mixing in solution with a synthetic hydrocarbon tackifier resin available under the registered trademark "Wingtack plus" from the Goodyear Tire and Rubber Company. Shear adhesion was determined by ASTM-D3654 25.4×25.4 mm overlap shear to fiberboard at 49°C. The shear adhesion values of the various PSA compositions identified in Table II were compared to that of control PSA compositions made with a four arm radial block polymer available under the registered trademark "Solprene" 423 (Phillips Chemical Co.) and a linear triblock polymer available under the registered trademark "Kraton" 1107 (Shell Chemical Company). Results are shown in Table II.

TABLE II

Shear adhesion minutes

| Tackifier resin phr | ABA linear copolymer | Radial (AB) block copolymer | Star polymer S-8 |
|---|---|---|---|
| 80 | 2840[1] | 1500[1] | 2840[1] |
|  | 2840[1] | 1500[1] | 2840[1] |
| 100 | 1344 | 1000[1] | 2840[1] |
|  | 947[1] | 1000[1] | 2840[1] |
| 120 | 1245 | 1399 | 2840[1] |
|  | 1199[1] | 1220[1] | 2840 |
| 140 | 891 | 560 | 2840[1] |
|  | 880 | 343 | 2840[1] |
| 160 | 10 | 226 | 2359 |
|  | 10 | 75 | 1318 |
| 180 | 3 | 3 | 12 |
|  | 6 | 10 | 17 |
| 200 | 2 | 0.3 | 1 |
|  | 1 | 0.3 | 1 |

[1]. Test was terminated before failure occurred.

Example 2

Adhesive compositions according to the invention were prepared by solution blending star block copolymer star polymer Nos. S-2, S-8 or ABA linear block copolymer (available under the registered trademark "Kraton" 1107) with polyterpene tackifier resin available under the registered trademark "Zonarez" M1115 (Arizona Chemical Co.) Shear adhesion values were determined by ASTM D3654 and results are shown in Table III.

TABLE III

Shear adhesion (Minutes)

| Tackifier phr | ABA copolymer | S-2 | S-8 |
|---|---|---|---|
| 80 | 2580[1] | 2580[1] | 2640[1] |
|  | 2580[1] | 1850[1] | 2640[1] |
| 100 | 2580[1] | 2282 | 2640[1] |
|  | 2580[1] | 2032 | 2640[1] |
| 120 | 1791 | 393 | 2640[1] |
|  | 787 | 662 | 2640[1] |
| 140 | 305 | 94 | 2640[1] |
|  | 337 | 83 | 2640[1] |

[1]. Test was terminated before failure occurred.

Example 3

A series of star block copolymers (Nos. S-6, S-2, S-7 and S-8) with increasing molecular weights but relatively constant composition were compounded with tackifier resin (available under the registered trademark "Wingtack Plus" from the Goodyear Tire and Rubber Co.) to produce PSA compositions. The shear adhesion values of these compositions were determined by testing 12.7 mm by 19 mm overlap shear bonds to fiberboard at 49°C (a modified ASTM-D3654 method). These formulations were compared to a PSA composition made with a commercial ABA linear block copolymer (available under the registered trademark "Kraton" 1107). Results are reported in Table IV

6

TABLE IV

Shear adhesion (minutes)

| Polymer Tackifier (phr) | ABA Copolymer | S-6 | S-2 | S-7 | S-8 |
|---|---|---|---|---|---|
| 100 | 3024[1] | 27 | 1349 | 3610[1] | 3820[1] |
|  | 3024[1] | 25 | 1067 | 3713[1] | 1977[1] |
| 120 | 1750[1] | 16 | 1021 | 2014[1] | 3820[1] |
|  | 1505[1] | 18 | 601 | 2013[1] | 3820[1] |
| 140 | 590 | 23 | 651 | 2981[1] | 3255[1] |
|  | 701 | 14 | 760 | 3679[1] | 3814[1] |
| Composition: (styrene/isoprene)[2] | 11.5/70 | 6/36 | 8/40 | 12/74 | 15/76 |

[1]. Test was terminated before failure occurred.
[2]. As determined by SEC GPC

Example 4

A series of polymers (Nos. S-1, S-3, S-4 and S-5) with relatively constant molecular weight but increasing styrene content were compounded with tackifier resin available under the registered trademark "Wingtack Plus" from Goodyear Tire and Rubber Co. to produce PSA compositions. The shear adhesion was determined as described in Example 2. Results are reported in Table V.

TABLE V

Shear adhesion (minutes)

| Polymer tackifier (phr) | S-1 | S-3 | S-4 | S-5 |
|---|---|---|---|---|
| 100 | 252 | 2820[1] | 2820[1] | 3786[1] |
|  | 362 | 2820[1] | 2485[1] | 2786[1] |
| 120 | 303 | 2820[1] | 2820[1] | 3786[1] |
|  | 302 | 2820[1] | 2820[1] | 3786[1] |
| 140 | 167 | 2820[1] | 2820[1] | 3786[1] |
|  | 278 | 5482[1] | 5482[1] | 3786[1] |
| % styrene | 11.8 | 14.3 | 16.7 | 22.4 |

[1]. Test was terminated before failure occurred.

Example 5

The star block copolymer adhesives of the invention were also compared to their linear analogs formed by coupling only two arms together and the shear adhesion determined as in Example 2. Results are reported in Table VI.

TABLE VI

| Polymer tackifier resin[1] (phr) | Shear adhesion (minutes) | |
|---|---|---|
|  | S-9[2] | S-2 |
| 100 | 28 | 2176 |
|  | 30 | 2071 |
| 120 | 14 | 1624 |
|  | 17 | 1805 |
| 140 | — | 739 |
|  | — | 1123 |

[1]. Available under the registered trademark "Escorez" 1310 (Exxon Chemical Co.).
[2]. S-9 is not a star block copolymer. It is a linear two arm analog of star block copolymer S-2.

7

Example 6
Hot-melt experiments

After a pre-weighed amount of hydrocarbon tackifier resin available under the registered trademark "Escorez" 1310 (Exxon Chemical Company) had been melted in a Helicone® mixer (Atlantic Research Corporation), the polystryene-polyisoprene block copolymer was added to the mixer. These two components were mixed for 10 to 15 minutes and the molten resultant adhesive was pumped through a die onto a 50 µm polyester film and the coated sheet was rolled into a jumbo roll. The jumbo roll was slit into 25.4 mm wide rolls of adhesive tapes. The hot-melt adhesive formulations, processing temperatures and coating weights of the experiment are reported in Table VII.

TABLE VII

| Polymer | Tackifier (phr) | Mixer temp. (degrees C) | Mixing time (minutes) | Coating weight (mg/200 cm$^2$) |
|---|---|---|---|---|
| Linear triblock[1] | 100 | 177 | 14 | 670 |
| S-2 | 100 | 174 | 10 | 960 |
| S-2 | 120 | 174 | 8 | 820 |
| S-8 | 120 | 193 | 14 | 685 |
| S-8 | 140 | 180 | 15 | 645 |

[1]. Available under the registered trademark "Kraton" 1107 (Shell Chemical Company).

Explanation of data in Figures 1—4

An Instron® Capillary Rheometer 3211 equipped with recording instruments which facilitate the calculations needed to plot the viscosity in poise versus the shear rate in reciprocal seconds ($S^{-1}$) was employed for these measurements. The same tackifier (Wingtack 95®) which is typical of the class of preferred tackifiers and at five (5) levels of loading was used with each block copolymer to produce adhesive compositions which were evaluated. The rate of shear chosen ($10^2$ to $10^4$ $s^{-1}$) covers the range normally encountered in melt extrusion processes. The rate of 5000 $s^{-1}$ at which the melt viscosities of the examples were compared was chosen because it very closely approximates the shear rates encountered in extrusion equipment being used in the adhesive coating industry today.

A study of Figures 1—4 reveals that adhesives prepared from Examples S-2 and S-8, typical adhesive compositions containing star block copolymers according to the present invention, can be extruded as easily as adhesives prepared from a linear ABA block copolymer (e.g., that sold under the trade designation Kraton® 1107) and a 4 arm radial block copolymer (e.g., that sold under the trade designation Solprene® 423). The difference, which might escape an unskilled observer, is key to the invention. That difference is the network integrity one may obtain from the star block copolymer through the crosslinking effect of the linking agent such as divinyl benzene "nucleus". It is this property which provides the superior internal strength which so admirably suits the PSAs of this invention to the critical requirements of a tape with high packaging and high shear holding power performance. Figures 1—4 are measurements of melt viscosities of the tackified block copolymers at shear rates encountered in industry and were designed to support the claimed invention.

These plots clearly show the superiority of the tackified star block copolymers of this invention over commercially available linear or four arm radial block copolymer adhesives at high tackifier levels.

**Claims**

1. A normally tacky and pressure sensitive adhesive composition having a melt viscosity in the range of about 4—25 Pa · s (40—250 poise) measured at a shear rate of 5,000 $s^{-1}$ and comprising:

(1) star block copolymer having the general formula (A—B)$_n$C wherein:

"(A—B)" represents one of "n" polymeric arms radiating from a nucleus represented by "C";

"A" represents a terminal polymeric block consisting essentially of polymerized monovinyl aromatic monomer having 8 to 18 carbon atoms and being selected from a group consisting of styrene and alkylated styrene;

"B" represents a polymeric block consisting essentially of polymerized conjugated diene monomer having 4 to 12 carbon atoms;

"C" represents the residue of a polyvinyl aromatic compound which provides a nucleus which links together at least 6 polymeric arms of said star block copolymer;

"n" is an integer of at least 6, n being measured by size exclusion gel permeation chromatography; and wherein:

"A" comprises about 5—25 weight percent of the total weight percent of the total weight of A and B in said polymer;

"B" comprises about 75—95 weight percent of the total weight of A plus B in said polymer; and

"C" comprises no more than about 3 weight percent of the total weight of said star block copolymer; and

(2) sufficient adhesive tackifier resin to maintain in said adhesive composition a shear holding power of at least 1,000 minutes.

2. A normally tacky and pressure-sensitive adhesive composition according to claim 1 characterised by said adhesive tackifier resin being selected from polyterpene resin, polyvinyl aromatic resin, coumarone-indene, and mixed $C_5$ aliphatic and $C_9$ aromatic hydrocarbon resins.

3. A normally tacky and pressure sensitive adhesive composition according to claim 2 characterised by said adhesive tackifier resin being mixed $C_5$ aliphatic and $C_9$ aromatic hydrocarbon resins.

4. A normally tacky and pressure sensitive adhesive composition according to any one of claims 1 to 3 characterised by said monovinyl aromatic monomer being selected from styrene and methyl styrene.

5. A normally tacky and pressure sensitive adhesive composition according to any one of claims 1 to 4 characterised by said conjugated diene monomer being isoprene.

6. A normally tacky and pressure sensitive adhesive composition according to any one of claims 1 to 5 characterised by said tackifier resin comprising 50 to 300 parts by weight per 100 parts of said star block copolymer.

7. A coated sheet material comprising a backing member and a normally tacky and pressure sensitive adhesive composition covering at least a portion of one major surface thereof characterised in that said normally tacky and pressure sensitive adhesive composition is a composition according to any one of claims 1 to 6.

8. A coated sheet material according to claim 7 further characterised by said backing member being flexible.

9. A coated sheet material according to claim 8 further characterised by said backing member being a tape backing.

10. A coated sheet material according to claim 9 further characterised by said backing member being coated entirely over one major surface with said adhesive composition and said adhesive coated backing being wound into a roll.

11. A coated sheet material according to any one of claims 7 to 10 further characterised by said backing member being a sheet formed by a material selected from the group consisting of paper, fabric, film-forming polymer, metal, rubber and ceramic.

**Patentansprüche**

1. Normalerweise klebfähige Haftkleberzusammensetzung mit einer bei einer Schergeschwindigkeit von 5000 $s^{-1}$ gemessenen Schmelzviskosität von etwa 4 bis 25 Pa s, mit

(1) einem Stern-Blockcopolymer mit der allgemeinen Formel $(A—B)_nC$ in der

(A—B) einen von n polymeren Armen bedeutet, die sich von einem durch C dargestellten Kern auswärts erstrecken;

A einen endständigen polymeren Block darstellt, der im wesentlichen aus polymerisiertem Monovinylaromatmonomer besteht, die 8 bis 18 Kohlenstoffatome besitzen und aus einer Gruppe ausgewählt sind, die aus dem Styrol und dem alkylierten Styrol besteht;

B einen polymeren Block darstellt, der im wesentlichen aus polymerisierten konjugierten Dienmonomeren mit 4 bis 12 Kohlenstoffatomen besteht;

C den Rest einer Polyvinylaromatverbindung darstellt, die einen Kern bildet, der mindestens 6 polymere Arme des Stern-Blockcopolymers miteinander verbindet und

n eine ganze Zahl von mindestens 6 ist, wobei n durch Größenausschluß-Gelchromatographie gemessen wird, wobei

die Menge von $A$ etwa 5 bis 25 Gew.% der Gesamtgewichtsprozent des Gesamtgewichts von A plus B in dem genannten Polymer beträgt;

die enge von $B$ etwa 75 bis 95 Gew.% der Gesamtgewichtsprozente des Gesamtgewichts von A plus B in dem Polymer beträgt; und

die Menge von $C$ höchstens etwa 3 Gew.% des Gesamtgewichts des Sternblockcopolymers ausmacht, und

(2) so viel Klebstoffklebrigmacherharz, daß in der Kleberzusammensetzung eine Scherhaltekraft von mindestens 1000 min aufrechterhalten wird.

2. Normalerweise klebfähige Haftkleberzusammensetzung nach Anspruch 1, dadurch gekennzeichnet, daß das Klebstoffklebrigmacherharz aus dem Polyterpenharz, Polyvinylaromatenharz, Cumaron-Inden-Harz und Gemischen von aliphatischen $C_5$ Kohlenwasserstoffharzen und aromatischen $C_9$-Kohlenwasser-stoffharzen ausgewählt ist.

3. Normalerweise klebfähige Haftkleberzusammensetzung nach Anspruch 2, dadurch gekennzeichnet, daß das Klebstoffklebrigmacherharz ein Gemisch aus aliphatischen $C_5$Kohlenwasserstoffharzen und aromatischen $C_9$-Kohlenwasserstoffharzen ausgewählt ist.

4. Normalerweise klebfähige Haftkleberzusammensetzung nach einem der Ansprüche 1 bis 3, dadurch gekennzeichnet, daß das Monovinylaromatmonomer aus dem Styrol und Methylstyrol ausgewählt ist.

5. Normalerweise klebfähige Haftkleberzusammensetzung nach einem de Ansprüche 1 bis 4, dadurch gekennzeichnet, daß das konjugierte Dienmonomer Isopren ist.

6. Normalerweise klebfähige Haftkleberzusammensetzung nach einem der Ansprüche 1 bis 5, dadurch gekennzeichnet, daß die Menge des Klebrigmacherharzes 50 bis 300 Gewichtsteile pro 100 Gewichtsteile des Stern-Blockcopolymers beträgt.

7. Beschichtetes Blattmaterial mit einem Träger und einer mindestens einen Teil einer Breitseite des Trägers bedeckenden, normalerweise klebfähigen Haftkleberzusammensetzung, dadurch gekennzeichnet, daß die normalerweise klebfähige Haftkleberzusammensetzung eine Zusammensetzung nach einem der Ansprüche 1 bis 6 ist.

8. Beschichtetes Blattmaterial nach Anspruch 7, dadurch gekennzeichnet, daß der Träger flexibel ist.

9. Beschichtetes Blattmaterial nach Anspruch 8, dadurch gekennzeichnet, daß der Träger ein Bandträger ist.

10. Beschichtetes Blattmaterial nach Anspruch 9, dadurch gekennzeichnet, daß der Träger auf einer Breitseite vollständig mit der Kleberzusammensetzung beschichtet ist und daß der kleberbeschichtete Träger zu einer Rolle aufgewicket ist.

11. Beschichtetes Blattmaterial nach einem der Ansprüche 7 bis 10, dadurch gekennzeichnet, daß der Träger ein Blattmaterial aus einem Werkstoff ist, der aus der Gruppe ausgewählt ist, die aus Papier, Textilstoff, filmbildendes Polymer, Metall, Gummi und Keramik besteht.

## Revendications

1. Composition adhésive normalement poisseuse et sensible à la pression, ayant une viscosité à l'état fondu, mesurée à une vitesse de cisaillement de $5000s^{-1}$, se situant dans la plage de 4 à 25 Pa.s environ (40 à 250 poises), et comprenant:

(1) un copolymère séquencé en étoile ayant la formule générale $(A—B)_nC$ dans laquelle:

"(A—B)" représente l'un des "n" bras de polymérisation qui rayonnent à partir d'un noyau représenté par "C";

"A" représente un bloc polymère terminal constitué essentiellement de monomère aromatique monovinylique polymérisé qui possède de 8 à 18 atomes de carbone et qui este choisi parmi l'ensemble comprenant le styrène et le styrène alkylé;

"B" représente un bloc polymère constitué essentiellement de monomère de diène conjugué polymérisé qui possède de 4 à 12 atomes de carbone;

"C" représente le résidu d'un composé aromatique polyvinylique qui fournit un noyau reliant ensemble au moins six bras de polymérisation dudit copolymère séquencé en étoile;

"n" est un entier valant au moins 6, n étant mesuré par chromatographie sur colonne de gel à exclusion de dimension; et dans laquelle:

"A" représente environ 5 à 25% en poids du poids total de A plus B dans ledit polymère;

"B" représente environ 75 à 95% en poids du poids total de A plus B dans ledit polymère; et

"C" ne représente pas plus de 3% en poids environ du poids total dudit copolymère séquencé en étoile; et

(2) une résine poissante ou collante suffisamment adhésive pour maintenir dans ladite composition adhésive un pouvoir de retenue au cisaillement d'au moins 1000 minutes.

2. Composition adhésive normalement poisseuse et sensible à la pression suivant la revendication 1, caractérisé en ce que ladite résine poissante ou collante qui est adhésive est choisie parmi les résines de polyterpène, les résines aromatiques polyvinyliques aromatiques, les résines coumarone-indène, et les résines hydrocarbonées mixtes aliphatiques en $C_5$ et aromatiques en $C_9$.

3. Composition adhésive normalement poisseuse et sensible à la pression suivant la revendication 2, caractérisé en ce que ladite résine poissante ou collante qui est adhésive est un mélange de résines hydrocarbonées aliphatiques en $C_5$ et aromatiques en $C_9$.

4. Composition adhésive normalement poisseuse et sensible à la pression suivant l'une quelconque des revendications 1 à 3, caractérisée en ce que ledit monomère monovinylique aromatique est choisi parmi le styrène et le méthylstyrène.

5. Composition adhésive normalement poisseuse et sensible à la pression suivant l'une quelconque des revendications 1 à 4, caractérisé en ce que ledit monomère de diène conjugué est l'isoprène.

6. Composition adhésive normalement poisseuse et sensible à la pression suivant l'une quelconque des revendications 1 à 5, caractérisée en ce que ladite résine poissante ou collante représente 50 à 300 parties en poids pour 100 parties dudit copolymère séquencé en étoile.

7. Matière en feuille revêtue, comprenant un élément support et une composition adhésive normalement poisseuse et sensible à la pression qui recouvre au moins une partie d'une surface principale du support, caractérisée en ce que ladite composition adhésive normalement poisseuse et sensible à la pression est une composition suivant l'une quelconque des revendications 1 à 6.

8. Matière en feuille revêtue suivant la revendications 7, caractérisés en outre en ce que ledit élément support est souple.

9. Matière en feuille revêtue suivant la revendication 8, caractérisée en outre en ce que ledit élément support est un support de type ruban.

10. Matière en feuille revêtue suivant la revendication 9, caractérisée en outre en ce que ledit élément support est revêtu entièrement sur une surface principale avec ladite composition adhésive, ledit support revêtu d'adhésif étant enroulé sous la forme d'une bobine.

11. Matière en feuille revêtue suivant l'une quelconque des revendications 7 à 10, caractérisée en outre en ce que ledit élément support est une feuille formée d'une matière choisie parmi l'ensemble comprenant les papier, tissu, polymère filmogène, métal, caoutchouc et céramique.

VISCOSITY (POISE) 0.1 Pa·s

PRIOR ART

TACKIFIER (phr)
80
100
120
140
160

0.1 Pa·s (POISE)
130
105
85
70
60

SHEAR RATE $(s^{-1})$

**FIG.1**

0.1 Pa·s
VISCOSITY (POISE)

PRIOR ART

TACKIFIER (phr)
80
100
120
140
160

0.1 Pa·s (POISE)
130
110
85
70
60

SHEAR RATE $(s^{-1})$

**FIG.2**

0 130 087

FIG.3

FIG.4